# EUROPEAN PATENT APPLICATION

(11) **EP 4 105 581 A1**
(43) Date of publication of application: **21.12.2022**
(21) Application number: 20927243.4
(22) Date of filing: 23.12.2020
(51) Int. Cl.: F25D 25/02, F25D 17/00

(54) **FRESH-KEEPING DEVICE AND REFRIGERATOR**

(30) Priority: 24.03.2020 CN 202010211906
(71) Applicant: Hefei Midea Refrigerator Co., Ltd., Hefei, Anhui 230088 (CN); Hefei Hualing Co., Ltd., Hefei, Anhui 230601 (CN); Midea Group Co., Ltd., Foshan, Guangdong 528311 (CN)
(72) Inventor: REN, Xianghua, Hefei, Anhui 230088 (CN); ZHOU, Xin, Hefei, Anhui 230088 (CN); TANG, Xueqiang, Hefei, Anhui 230088 (CN)
(74) Representative: Whitlock, Holly Elizabeth Ann
(86) International application number: PCT/CN2020/138705
(87) International publication number: WO 2021/190005

(57) **Abstract**

A fresh-keeping device for a refrigerator, and a refrigerator. The fresh-keeping device (100) comprises: a fresh-keeping box body (101) having a lower frame (103) and an upper frame (102), the lower frame (103) being provided with an accommodating space as well as an opening (111) and a gas inlet (601) communicated with the accommodating space, the upper frame (102) being provided with a refrigerating air channel (301), and the refrigerating air channel (301) being used for refrigerating the accommodating space; a drawer (104) capable of entering from the opening (111) and accommodated in the accommodating space so as to fit the fresh-keeping box body (101) to form the sealed accommodating space (308); and a nitrogen generating means (105) connected to the side of the fresh-keeping box body (101) on which the gas inlet (601) is formed and capable of charging generated nitrogen into the accommodating space (308) from the gas inlet (601).

## Description

### CROSS-REFERENCES TO RELATED APPLICATIONS

The present disclosure claims priority to Chinese Application No. 202010211906.3, filed on March 24, 2020 and entitled "FRESH-KEEPING DEVICE AND REFRIGERATOR", the entire contents of which are incorporated herein by reference.

### FIELD

The present disclosure relates to the field of refrigeration storage devices, and more particularly, relates to a fresh-keeping device and a refrigerator thereof.

### BACKGROUND

In order to keep fruits and vegetables fresh, the respiration of fruits and vegetables is often slowed down by a low temperature or a reduction of oxygen concentration to slow down a consumption speed of organic substances.

However, in order to reduce an oxygen concentration, usually, nitrogen content is increased by, for example, using a nitrogen generating means, and thus oxygen content is relatively reduced. However, an existing nitrogen generating means is often used separately or in a refrigerator, with the disadvantage of slow oxygen reduction rate, leading to a poor fresh-keeping effect on fruits and vegetables.

The contents above are only used to assist in understanding the embodiments of the present disclosure, and are not meant to be construed as prior art.

### SUMMARY

The present disclosure aims to solve at least one of the problems to a certain extent. Therefore, the present disclosure provides a fresh-keeping device with a high oxygen reduction rate, which may be used for a refrigerator.

Meanwhile, the present disclosure further provides a refrigerator with the fresh-keeping device above.

A fresh-keeping device for a refrigerator according to an embodiment of the present disclosure includes: a fresh-keeping box body, which has a lower frame provided with an accommodating space to which an opening and a gas inlet are communicated, and an upper frame, which is provided with a refrigerating air channel is configured to refrigerate the accommodating space; a drawer, which is configured to access and being contained in the accommodating space through the opening to form a sealed accommodating space with the fresh-keeping box body; and a nitrogen generating means, which is connected to the fresh-keeping box body at one side on which the gas inlet is arranged and is configured to charge a generated nitrogen into the accommodating space through the gas inlet.

The fresh-keeping device according to the embodiment of the present disclosure at least has the following beneficial effects: a drawer-type structure is adopted, and the drawer is fitted with the box body to form the sealed accommodating space, which can ensure that an oxygen concentration is quickly reduced after nitrogen is filled into the accommodating space. The fresh-keeping box body is provided with the refrigerating air channel, which can improve a refrigeration effect of the accommodating space. Good oxygen reduction effect and refrigeration capacity will improve a fresh-keeping effect on fruits and vegetables.

According to some embodiments of the present disclosure, the fresh-keeping device further includes: a one-way valve, which is arranged on the lower frame or the drawer, and gas in the accommodating space may be discharged out of the fresh-keeping device, and oxygen-rich gas from an outside environment is prevented from entering the accommodating space.

According to some embodiments of the present disclosure, the nitrogen generating means includes: a housing, which is provided with a gas outlet communicating with the gas inlet; a vacuum pump having a pump inlet pipe and a pump outlet pipe; an adsorption cylinder, which is provided with an oxygen adsorbent inside, and the adsorption cylinder has a cylinder inlet pipe and a cylinder outlet pipe; the cylinder inlet pipe is connected with the pump inlet pipe and the pump outlet pipe; a first three-way valve, which is connected between the cylinder inlet pipe and the pump inlet pipe, and a second three-way valve, which is connected between the cylinder inlet pipe and the pump outlet pipe; and a nitrogen storage tank having a tank inlet pipe and a tank outlet pipe, the tank inlet pipe is communicated with the cylinder outlet pipe, and the tank outlet pipe is communicated with the gas outlet.

According to some embodiments of the present disclosure, the vacuum pump, the adsorption cylinder and the nitrogen storage tank are provided on the housing in a coplanar arrangement.

According to some embodiments of the present disclosure, a first one-way valve is arranged between the cylinder outlet pipe and the tank inlet pipe, and a second one-way valve is arranged between the gas outlet and the tank outlet pipe.

According to some embodiments of the present disclosure, the gas inlet is provided with an inner hole cylinder, the gas outlet is provided with a groove matched with the inner hole cylinder correspondingly, and a sealing ring is arranged between the groove and the inner hole cylinder.

According to some embodiments of the present disclosure, a sealing strip is arranged between the opening and the drawer to ensure a sealing performance between the opening and the drawer.

According to some embodiments of the present disclosure, the upper frame is provided with a cooled air inlet on a side wall of one side, and a side wall of the other opposite side is provided with a cooled air outlet, and the cooled air inlet and the cooled air outlet are both communicated with the refrigerating air channel.

According to some embodiments of the present disclosure, the drawer includes an end cover, and the upper frame is arranged to be protruded from the lower frame, and a recess is formed at the side on which the opening of the fresh-keeping box body is provided, and at least a part of the end cover is placed in the recess.

A refrigerator according to an embodiment of the present disclosure includes: a cold-storage room; a cold-storage air channel communicated with the cold-storage room, the cold-storage air channel has an air outlet. The fresh-keeping device according to any one of claims 1 to 9 is arranged in the cold-storage room, where the refrigerating air channel is communicated with the air outlet.

The refrigerator according to the embodiment of the present disclosure not only has the embodiments of the fresh-keeping device, but also has at least the following beneficial effects: the fresh-keeping device is separately arranged in the cold-storage room of the refrigerator, which expands the application of the refrigerator, and will not damage a fresh-keeping environment in the accommodating space by opening the refrigerator door.

Embodiments of the present disclosure will be explained in part in the following description, which can become apparent from the following description or be understood through practice of the present disclosure.

### BRIEF DESCRIPTION OF THE DRAWINGS

The above and/or additional embodiments of the present disclosure can become apparent and easy to understand from the description of embodiments in conjunction with the following drawings, where:
FIG. 1 is a stereoscopic exploded diagram of a fresh-keeping device according to an embodiment of the present disclosure;
FIG. 2 is a left view of a fresh-keeping device according to an embodiment of the present disclosure;
FIG. 3 is a cross-sectional view along A-A section of the fresh-keeping device of FIG. 2 according to the embodiment of the present disclosure;
FIG. 4 is a principle diagram of an internal structure of a nitrogen generating means of a fresh-keeping device according to an embodiment of the present disclosure;
FIG. 5 is a top view of a fresh-keeping device according to an embodiment of the present disclosure;
FIG. 6 is an enlarged structural diagram from part B of the nitrogen generating means of the fresh-keeping device according to the embodiment of the present disclosure;
FIG. 7 is a principle diagram of a nitrogen generating process of a nitrogen generating means of a fresh-keeping device according to an embodiment of the present disclosure;
FIG. 8 is a principle diagram of a desorption process of a nitrogen generating means of a fresh-keeping device according to an embodiment of the present disclosure; and
FIG. 9 is a stereoscopic structural diagram of a refrigerator according to an embodiment of the present disclosure.

**Reference numerals:**

| | | | |
|---|---|---|---|
| 100: | fresh-keeping device; | 101: | fresh-keeping box body; |
| 102: | upper frame; | 103: | lower frame; |
| 104: | drawer; | 105: | nitrogen generating means; |
| 106: | gas outlet; | 107: | housing; |
| 108: | sealing strip; | 109: | end cover; |
| 110: | guide rail; | 111: | opening; |
| 201: | cooled air inlet; | | |
| 301: | refrigerating air channel; | 302: | adsorption cylinder; |
| 303: | nitrogen storage tank; | 304: | cooled air flow; |
| 305: | nitrogen flow; | 306: | cooled air outlet; |
| 307: | recess; | 308: | accommodating space; |
| 401: | vacuum pump; | 402: | pump inlet pipe; |
| 403: | first three-way valve; | 404: | second three-way valve; |
| 405: | cylinder inlet pipe; | 406: | pump outlet pipe; |
| 407: | tank inlet pipe; | 408: | tank outlet pipe; |
| 409: | cylinder outlet pipe; | 410: | first one-way valve; |
| 411: | second one-way valve; | | |
| 601: | gas inlet; | 602: | sealing ring; |
| 603: | groove; | 604: | guide portion; |
| 605: | limit portion; | | |
| 900: | refrigerator; | 901: | cold-storage room |

### DETAILED DESCRIPTION OF THE DISCLOSURE

Embodiments of the present disclosure are described below in detail, illustrations of which are shown in the accompanying drawings, where identical or similar reference numerals denote identical or similar elements or elements having the same or similar functions. The embodiments described below by reference to the accompanying drawings are exemplary and are intended only to explain the present disclosure and are not to be construed as limiting the present disclosure.

The terms, such as "first" and "second", are used for descriptive purposes only, and cannot be construed as indicating or implying relative importance, or implicitly indicating the number of features indicated thereby. Therefore, the features defined by "first" and "second" may explicitly or implicitly include one or more of the features.

In the description of the present disclosure, it should be noted that the terms, such as "connection", should be understood in a broad sense unless otherwise specified and defined. For example, they may be a fixed connection or a movable connection, a detachable connection or a non-detachable connection, or an integrated connection; or may be a mechanical connection, or an electrical connection or a mutual communication; or may be a direct connection, or an indirect connection through an intermediate medium; or may be a communication or indirect communication inside two elements, or an interaction relationship between two elements.

In the description of the present disclosure, it should be noted that names of components in a refrigerator 900 and a fresh-keeping device 100 of the present disclosure should be comprehended in a broad sense, but not meant to be limiting the scope of the embodiments.

The following disclosure provides many different embodiments or examples for implementing different solutions of the present disclosure.

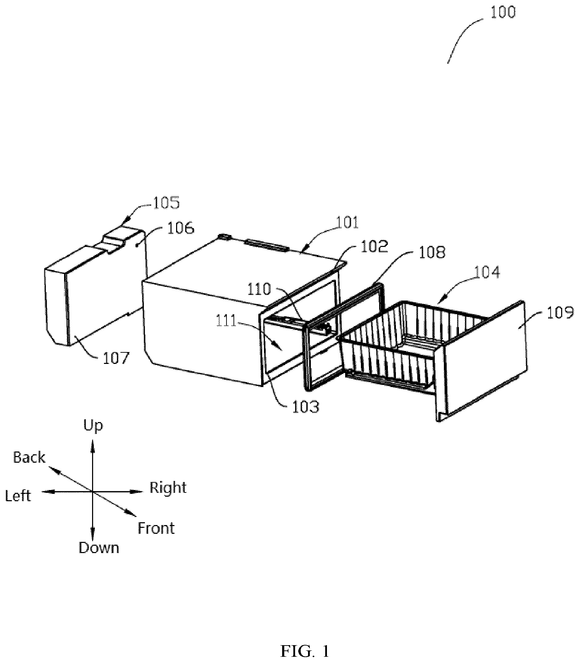

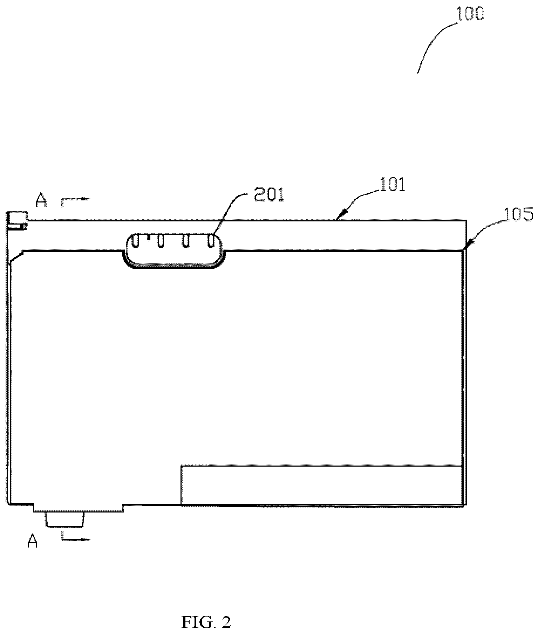

FIG. 1 - FIG. 5 show a fresh-keeping device 100 in the embodiments of the present disclosure, which is used in a refrigerator 900. The refrigerator 900 may refer to a refrigerating storage device in a broad sense, such as an electric refrigerator, an electric freezer, or a refrigerated cabinet.

In some embodiments, with reference to FIG. 1, the fresh-keeping device 100 includes: a fresh-keeping box body 101, which has a lower frame 103 provided with an accommodating space to which an opening 111 is communicated at one side, and the other opposite side is provided with a gas inlet communicated with the accommodating space, and an upper frame 102 is provided with a gas inlet 601 communicated with the accommodating space, and the upper frame 102 is provided with a refrigerating air channel 301 for refrigerating the accommodating space; a drawer 104, which is configured to access and being accommodated in the accommodating space through the opening 111 to form a sealed accommodating space 308 with the fresh-keeping box body 101; and a nitrogen generating means 105, which is connected to the fresh-keeping box body 101 at one side on which the gas inlet 601 is arranged, that is a rear side of the fresh-keeping box body 101, and is configured to charge a generated nitrogen into the accommodating space 308 through the gas inlet 601. It should be noted that the gas inlet 601 may also be arranged on other sides, which may be determined according to a specific structure of a cold-storage room 901 of the refrigerator 900.

In the embodiment above, it should be understood that, in order to ensure that the drawer 104 is arranged to form the sealed accommodating space 308 with the fresh-keeping box body 101, the lower frame 103 itself should be of a closed structure except the opening 111 and the gas inlet 601, and the refrigerating air channel 301 of the upper frame 102 should be separated from the accommodating space of the lower frame 103.

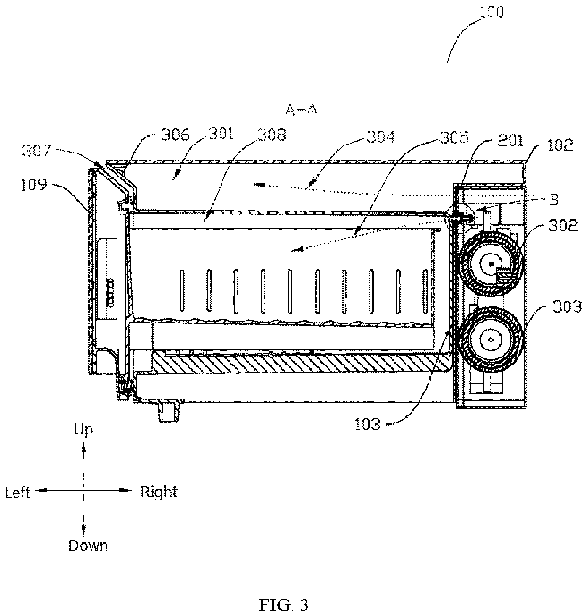

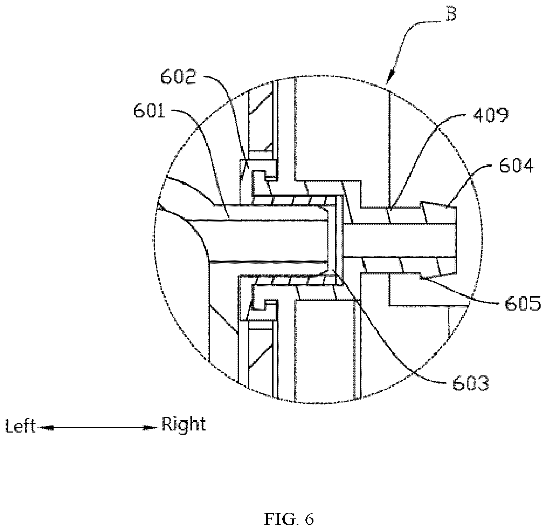

With reference to FIG. 3, it should be noted that cooled air enters the refrigerating air channel 301 through a cooled air inlet 201, and then is discharged from a cooled air outlet 306 to form a cooled air flow 304, and the refrigerating air channel 301 exchanges heat with the accommodating space, thus reducing temperature of the accommodating space. Nitrogen generated by the nitrogen generating means 105 enters the accommodating space 308 through the gas inlet 601 (with reference to FIG. 6), thus forming a nitrogen flow 305. As is known in the art, in order to transfer a lower temperature in the refrigerating air channel 301 to the accommodating space as soon as possible, a separator between the upper frame 102 and the lower frame 103 is made of a material with good heat transfer efficiency, such as metal.

In the embodiment above, the nitrogen generating means 105 removes oxygen from air (in the embodiment, it may refer to the cooled air in the refrigerator 900) to generate pure nitrogen by using a PSA nitrogen generating method, and then injects the nitrogen into the accommodating space 308 to achieve the purpose of keeping foods such as fruits and vegetables fresh. Pressure swing adsorption (PSA) is a mainstream technology for gas generation at present. The pressure swing adsorption refers to a method including pressurizing mixed gas at a constant temperature, and adsorbing excess foreign gas with an adsorbent to obtain relatively pure single gas, and then desorbing the foreign gas in the adsorbent by a reduced pressure or a normal pressure and the adsorbent can be reused. An oxygen adsorbent is a commonly used adsorbent for separating oxygen from nitrogen and extracting nitrogen from air. Under the same adsorption pressure, an oxygen adsorption capacity of the oxygen adsorbent is much higher than a nitrogen adsorption capacity of the oxygen adsorbent. This principle is used in the PSA nitrogen generating method, where nitrogen and oxygen in air are separated by using air as a raw material, adopting the pressure swing adsorption technology, and utilizing selective adsorption of oxygen and nitrogen by the oxygen adsorbent, thus generating pure nitrogen.

In the embodiment above, the fresh-keeping device 100 may be entirely placed in a low-temperature environment as needed, or the refrigerating air channel 301 of the fresh-keeping device 100 may be directly connected to an air channel of a ready-made refrigerating device to realize rapid refrigeration of the accommodating space.

In the embodiment above, in order to ensure that the drawer 104 is configured to conveniently enter the accommodating space and accurately sealing the accommodating space to form the sealed accommodating space 308, a guide rail 110 is arranged inside the lower frame 103. A bottom portion of the drawer 104 is also provided with a guide mechanism (not shown in the drawing) matched with the guide rail 110.

In addition, in order to supply power to the fresh-keeping device 100, the fresh-keeping device 100 must be electrically connected with a power supply when in use. In order to control the fresh-keeping device 100, the fresh-keeping device 100 must have a controller or be connected with an external controller.

The fresh-keeping device 100 according to the embodiment of the present disclosure has at least the following beneficial effects: the drawer-type structure is adopted, which can be conveniently opened and sealed; after the drawer 104 is fitted with the fresh-keeping box body 101 to form the sealed accommodating space 308, it can be ensured that nitrogen generated by the nitrogen generating means 105 is quickly filled into the accommodating space 308, and with the increase of pressure, oxygen-rich gas in the accommodating space 308 is squeezed out of the accommodating space 308. Due to a principle of gas diffusion, the gas naturally diffuses from a high concentration place to a low concentration place, and soon a nitrogen concentration in the drawer 104 can be increased to a set value (which means that an oxygen concentration can be reduced to a set value relatively), and the concentration is kept uniform. The fresh-keeping box body 101 is provided with the refrigerating air channel 301, which can improve a refrigeration effect of the accommodating space 308, and good oxygen reduction effect and refrigeration capacity can improve a fresh-keeping effect on foods (fruits and vegetables). In addition, by setting the fresh-keeping box body 101 and the nitrogen generating means 105 into an integral structure, a volume of the fresh-keeping device 100 can be greatly reduced, and the fresh-keeping device may be placed in the refrigerator 900 as a modular structure for use, thus making application of the fresh-keeping device 100 more flexible.

In some embodiments, the fresh-keeping device 100 further includes a one-way valve (not shown in the drawings) arranged on the lower frame 103 or the drawer 104, and gas in the accommodating space 308 is configured to be discharged out of the fresh-keeping device 100.

The purpose of arranging the one-way valve is that: when nitrogen generated by the nitrogen generating means 105 enters the accommodating space 308, with the increasing pressure, gas in the accommodating space 308 may be discharged out of the accommodating space 308 through the one-way valve, and air in outside environment is prevented from entering the accommodating space 308 through the one-way valve at the same time, and the nitrogen concentration in the accommodating space 308 is increased and the oxygen concentration in the accommodating space is reduced, thus providing a low-oxygen environment. It should be noted that when the one-way valve is arranged on the drawer 104, the one-way valve may be arranged outside the drawer 104, which means that the one-way valve is arranged on an end cover 109, and the gas in the accommodating space 308 is conveniently discharged out of the accommodating space 308. When the one-way valve is arranged on the lower frame 103, the one-way valve may be arranged on a side wall of the lower frame 103, and the gas in the accommodating space 308 may also be conveniently discharged out of the accommodating space 308.

In some embodiments, the nitrogen generating means 105 includes: a housing 107, which is provided with a gas outlet 106 for connecting with the gas inlet 601; a vacuum pump 401, which has a pump inlet pipe 402 and a pump outlet pipe 406; an adsorption cylinder 302, which is provided with an oxygen adsorbent inside, an adsorption cylinder 302 having a cylinder inlet pipe 405 and a cylinder outlet pipe 409, the cylinder inlet pipe 405 is connected with the pump inlet pipe 402 and the pump outlet pipe 406; a first three-way valve 403, which is connected between the cylinder inlet pipe 405 and the pump inlet pipe 402, and a second three-way valve 404, which is connected between the cylinder inlet pipe 405 and the pump outlet pipe 406; and a nitrogen storage tank 303 having a tank inlet pipe 407 and a tank outlet pipe 408, the tank inlet pipe 407 is communicated with the cylinder outlet pipe 409, and the tank outlet pipe 408 is communicated with the gas outlet 106. It should be noted that the oxygen adsorbent may selectively be a carbon molecular sieve and a zeolite.

During adsorption, the vacuum pump 401 is controlled to inject air with a positive pressure into the adsorption cylinder 302, and the oxygen adsorbent absorbs oxygen in the injected air. The generated nitrogen enters the nitrogen storage tank 303 from the gas outlet 106 of the adsorption cylinder 302, and the tank outlet pipe 408 of the nitrogen storage tank 303 is communicated with the accommodating space 308 to supply nitrogen to the accommodating space. During desorption, the vacuum pump 401 is controlled to pump air from the adsorption cylinder 302 at a negative pressure, and oxygen is more easily desorbed from the oxygen adsorbent and discharged through a desorption outlet pipe.

A traditional PSA nitrogen generating means is mostly used for large-scale nitrogen generation, and includes an air tank and an oil-water separation device. The air compressor has a high working pressure, a huge volume and a complex structure, which cannot meet a nitrogen generating requirement of the refrigerator 900. The fresh-keeping device 100 according to the embodiment of the present disclosure reduces a pressure requirement of the vacuum pump 401 by adopting a negative pressure desorption, which can reduce volume, cost and noise of the vacuum pump 401, and the vacuum pump is easier to be embedded into the refrigerator 900, thus improving a fresh-keeping performance of the refrigerator 900. It should be noted that the negative pressure desorption makes foreign gas (such as water vapor) easier to be desorbed and discharged at the same time, thus reducing a requirement for air cleanliness. Meanwhile, a pressure generated by the vacuum pump 401 is about 0.5 bar to 1 bar, which is enough to squeeze air in the accommodating space 308 to discharge the air through a door seal or the one-way valve of the drawer 104. In addition, the same vacuum pump 401 not only provides an air pressure effect for adsorption but also provides an air pressure effect for desorption by arranging the first three-way valve 403 and the second three-way valve 404, which further reduces an overall structural volume of the fresh-keeping device 100, thus it is convenient to embed the fresh-keeping device 100 into the refrigerator 900. The following process must be realized by a controller (not shown in the drawings), the controller may be arranged on the nitrogen generating means 105 or separately arranged on other devices, such as the refrigerator 900.

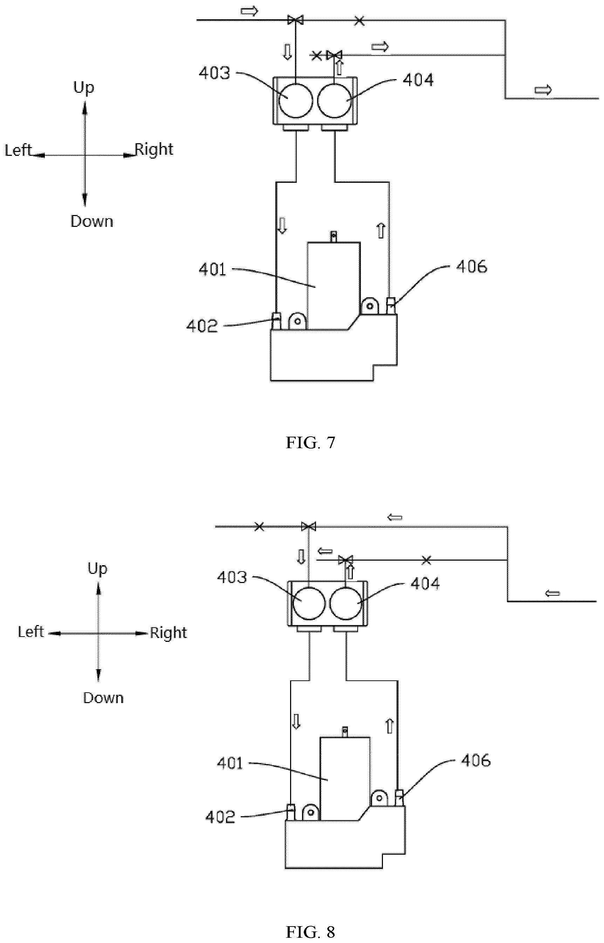

In order to explain a working process of the nitrogen generating means 105 more clearly, the explanation is now made with reference to FIG. 7 and FIG. 8.

FIG. 7 shows an adsorption process of the nitrogen generating means 105, and an arrow direction shows a flowing direction of gas. After receiving a command to start the adsorption process, the vacuum pump 401 is operated. Air enters from a left opening of the first three-way valve 403 and is discharged from a lower opening of the first three-way valve, and in this case a right opening of the first three-way valve is sealed. The air passes through the pump inlet pipe 402 and the pump outlet pipe 406 in sequence, then enters from a lower opening of the second three-way valve 404 and is discharged from a right opening of the second three-way valve, and in this case a left opening of the second three-way valve is sealed. Then air enters the adsorption cylinder 302 at a pressure through the cylinder inlet pipe 405 to complete the oxygen adsorption process.

FIG. 8 shows a desorption process of the nitrogen generating means 105, and an arrow direction shows a flowing direction of gas. After receiving a command to start the desorption process, the vacuum pump 401 is operated. Air is pumped out of the adsorption cylinder 302, and enters from the right opening of the first three-way valve 403 and is discharged from the lower opening of the first three-way valve, and in this case the left opening of the first three-way valve is sealed. The air passes through the pump inlet pipe 402 and the pump outlet pipe 406 in sequence, and then enters from the lower opening of the second three-way valve 404 and is discharged from the left opening of the second three-way valve, and in this case the right opening of the second three-way valve is sealed. Thus, the oxygen desorption process is finished.

It should be further noted that the adsorption cylinder 302 may be made of lowcost molded plastic to reduce a weight of the nitrogen generating means 105 and reduce a manufacturing cost of the nitrogen generating means 105. In order to connect both the right opening of the first three-way valve 403 and the right opening of the second three-way valve 404 to the cylinder inlet pipe 405 of the adsorption cylinder 302, a T-junction may be arranged among the right opening of the first three-way valve 403, the right opening of the second three-way valve 404 and the cylinder inlet pipe 405.

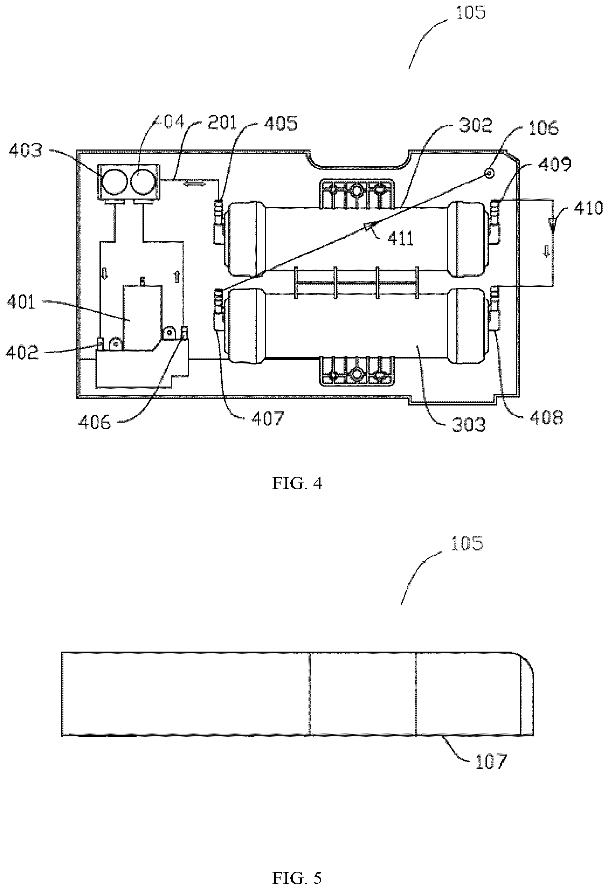

In some embodiments, with reference to FIG. 4 and FIG. 5, the vacuum pump 401, the adsorption cylinder 302 and the nitrogen storage tank 303 are arranged on the housing 107 in a coplanar arrangement, to further reduce an overall thickness of the nitrogen generating means 105, which is convenient for placing the nitrogen generating means on a rear side of the fresh-keeping box body 101, thus reducing the volume of the whole fresh-keeping device 100. A pipeline structure and a valve structure have relatively small occupied spaces, and based on the layout above, can optimize the design based on the principle of saving space.

In some embodiments, with reference to FIG. 4, a first one-way valve 410 is arranged between the cylinder outlet pipe 409 and the tank inlet pipe 407, and a second one-way valve 411 is arranged between the gas outlet 106 and the tank outlet pipe 408. Nitrogen in the nitrogen storage tank 303 may be prevented from flowing back into the adsorption cylinder 302 by arranging the first one-way valve 410, especially during the desorption process. The vacuum pump 401 may exert a negative pressure on the adsorption cylinder 302, and the first one-way valve 410 can prevent the nitrogen in the nitrogen storage tank 303 from flowing back. Gas in the accommodating space 308 can also be prevented from flowing back into the nitrogen storage tank 303 by arranging the second one-way valve 411. Meanwhile, the accommodating space 308 is designed in a relative sealed arrangement to maintain the low oxygen environment in the accommodating space 308, and the second one-way valve 411 also has contributions on this purpose.

In some embodiments, the gas inlet 601 of the sealed box body is provided with an inner hole cylinder. The gas outlet 106 of the nitrogen generating means 105 is provided with a groove 603 matched with the inner hole cylinder. And a sealing ring 602 is arranged between the groove and the inner hole cylinder. By such arrangements, during mounting of the fresh-keeping device 100, once the nitrogen generating means 105 is mounted in the fresh-keeping box body 101, the gas outlet 106 of the nitrogen generating means 105 and the gas inlet 601 of the sealed box body can be automatically sealed with the sealing ring 602, thus omitting a trouble of connecting with a hose connector, and making the fresh-keeping device 100 have a better integrity.

It should be noted that the gas outlet 106 of the nitrogen generating means 105 may be used as a detachable structure, which means that a position for mounting the gas outlet 106 is preserved on the nitrogen generating means 105, and it is only need to embed the structure of the gas outlet 106 in the preserved position during assembly. At the moment, for the convenience of embedding the structure of the gas outlet 106 in the preserved position, a right end of the structure of the gas outlet 106 is set to have a structure of the inner hole cylinder, and the inner hole cylinder is provided with a guide portion 604 at a most right end. Meanwhile, a limit portion 605 is also provided to prevent the structure of the gas outlet 106 from falling out of the preserved position,

In some embodiments, with reference to FIG. 1, a sealing strip 108 is arranged between the opening 111 and the drawer 104 of the fresh-keeping box body 101 to ensure a sealing performance between the opening 111 and the drawer 104. It should be noted that, according to an overall structure of the fresh-keeping box body 101, the sealing strip 108 is arranged on the inner frame 103, and a contour shape of an inner side of the end cover 109 of the drawer 104 corresponds to a shape of the sealing strip 108. The sealing strip 108 may be made of modified polyvinyl chloride (PVC), vulcanized ethylene propylene diene monomer (EPDM) or thermoplastic ethylene propylene diene monomer (EPDM/PP) rubber. The sealing strip 108 may also be arranged on the inner side of the end cover 109 of the drawer 104, which facilitates sealing between the opening 111 and the drawer 104 of the fresh-keeping box body 101. It can be understood that when the lower frame 103 or the drawer 104 is not provided with the one-way valve, once nitrogen generated by the nitrogen generating means 105 is filled into the accommodating space 308, gas in the accommodating space 308 may be squeezed out from the sealing strip 108 when a pressure value is increased to a value. The pressure value above is about 0.5 bar to 1 bar.

In some embodiments, with reference to FIG. 3, the cooled air inlet 201 is formed on a side wall of the upper frame 102 at the same side with the gas inlet 601 on the fresh-keeping box body 101, and a side wall on the other opposite side (which is namely the side with opening 111 of the fresh-keeping box body 101) is provided with the cooled air outlet 306. By arranging the cooled air inlet 201 and the cooled air outlet 306 along a moving direction of the drawer 104, the refrigerating air channel 301 is overlapped with the accommodating space to the maximum extent, to improve a refrigeration effect of the refrigerating air channel 301 on the accommodating space.

In some embodiments, with reference to FIG. 3, the upper frame 102 protrudes from the lower frame 103, and a recess 307 is formed at the side on which the opening 111 of the fresh-keeping box body 101 is provided, and at least a part of the end cover 109 of the drawer 104 is placed in the recess 307. By such arrangements, on one hand, a refrigeration range of the refrigerating air channel 301 can be enlarged, and on the other hand, the end cover 109 of the drawer 104 can be prevented from protruding the fresh-keeping box body 101 to affect an overall aesthetics.

It should be noted that the cooled air outlet 306 is located on the upper frame 102 and adjacent to the end cover 109 of the drawer 104. When the drawer 104 is closed, a gap is formed between the end cover 109 of the drawer 104 and the upper frame 102, to prevent the end cover 109 of the drawer 104 from shielding the cooled air outlet 306 of the refrigerating air channel 301 to affect a fluidity of the cooled air of the refrigerating air channel 301.

In some embodiments, in order to detect the oxygen concentration in the accommodating space 308, an oxygen concentration detection device (not shown in the drawings) is further arranged on the lower frame 103 or inside the drawer 104. A start time and a duration of nitrogen generation of the nitrogen generating means 105 are controlled by a detection value acquired from the oxygen concentration detection device, to control the oxygen concentration more intelligently, improve a control accuracy, and prolong a fresh-keeping period for fruits and vegetables.

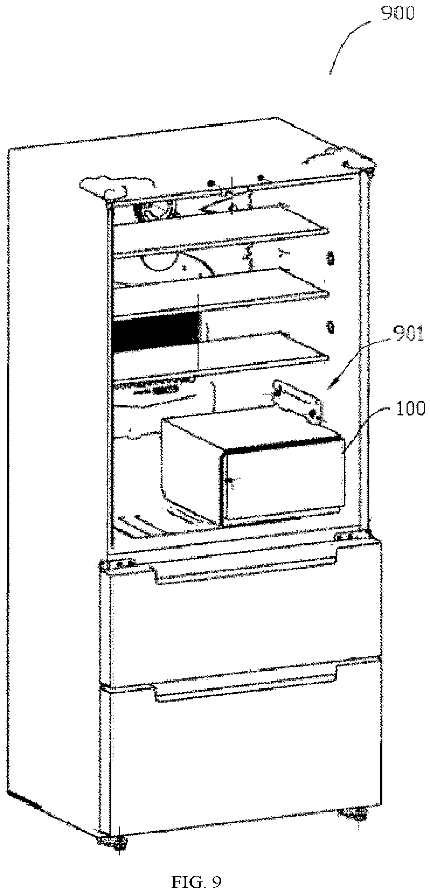

With reference to FIG. 9, the refrigerator 900 in the embodiments of the present disclosure includes: a cold-storage room 901; and a cold-storage air channel (not shown in drawings), the cold-storage air channel is communicated with the cold-storage room 901, and the cold-storage air channel has an air outlet (not shown in the drawings). The refrigerator 900 further includes the fresh-keeping device 100 in the embodiment of the present disclosure above arranged in the cold-storage room 901, where the refrigerating air channel 301 is communicated with the air outlet, thus the cold-storage air channel is used to cool the accommodating space directly.

It should be noted that temperature of the cold-storage room 901 of the refrigerator 900 is most suitable for keeping fruits and vegetables fresh. A reserved space is large, which is suitable for placing the fresh-keeping device. In addition, in order to supply power to the fresh-keeping device 100, the fresh-keeping device 100 must be electrically connected with a power supply of the refrigerator 900, and in order to control the fresh-keeping device 100, the fresh-keeping device 100 must have a controller or be connected with a controller of the refrigerator 900.

Air needed by the nitrogen generating means 105 is from the cooled air in the cold-storage room 901, which can ensure that the temperature of the accommodating space 308 may not fluctuate too much, thus it is beneficial for keeping fruits and vegetables fresh.

Although the embodiments of the present disclosure have been shown and described, the embodiments above are only the embodiments of the present disclosure, which are intended to reflect the outstanding effects and advantages of the present disclosure instead of limiting the solutions of the present disclosure. Modifications, changes or alternative features based on the contents of the present disclosure should be included in the scope of the appended claims of the present disclosure.

## Claims

1. A fresh-keeping device for a refrigerator, comprising:
a fresh-keeping box body, which has a lower frame provided with an accommodating space to which an opening and a gas inlet are communicated, and an upper frame, which is provided with a refrigerating air channel capable of refrigerating the accommodating space;
a drawer, which is capable of accessing and being contained in the accommodating space through the opening so as to form a sealed accommodating space with the fresh-keeping box body; and
a nitrogen generating means, which is connected to the fresh-keeping box body at one side on which the gas inlet is arranged and capable of charging a generated nitrogen into the accommodating space through the gas inlet.

2. The fresh-keeping device according to claim 1, further comprising:
a one-way valve arranged on the lower frame or the drawer, and gas in the accommodating space is capable of being discharged out of the fresh-keeping device.

3. The fresh-keeping device according to claim 1, wherein the nitrogen generating means comprises:
a housing provided with a gas outlet for connecting with the gas inlet;
a vacuum pump having a pump inlet pipe and a pump outlet pipe;
an adsorption cylinder, which is provided with an oxygen adsorbent inside, the adsorption cylinder has a cylinder inlet pipe and a cylinder outlet pipe, the cylinder inlet pipe is connected with the pump inlet pipe and the pump outlet pipe, and a first three-way valve is connected between the cylinder inlet pipe and the pump inlet pipe, a second three-way valve is connected between the cylinder inlet pipe and the pump outlet pipe; and
a nitrogen storage tank having a tank inlet pipe and a tank outlet pipe, the tank inlet pipe is communicated with the cylinder outlet pipe, and the tank outlet pipe is communicated with the gas outlet.

4. The fresh-keeping device according to claim 3, wherein the vacuum pump, the adsorption cylinder and the nitrogen storage tank are arranged on the housing in a coplanar arrangement.

5. The fresh-keeping device according to claim 3, wherein a first one-way valve is arranged between the cylinder outlet pipe and the tank inlet pipe, and a second one-way valve is arranged between the gas outlet and the tank outlet pipe.

6. The fresh-keeping device according to claim 1, wherein the gas inlet is provided with an inner hole cylinder, the gas outlet is provided with a groove matched with the inner hole cylinder, and a sealing ring is arranged between the groove and the inner hole cylinder.

7. The fresh-keeping device according to claim 1, wherein a sealing strip is arranged between the opening and the drawer to ensure a sealing performance between the opening and the drawer.

8. The fresh-keeping device according to claim 1, wherein the upper frame is provided with a cooled air inlet on a side wall of one side, and a side wall of the other opposite side is provided with a cooled air outlet, and the cooled air inlet and the cooled air outlet are both communicated with the refrigerating air channel.

9. The fresh-keeping device according to claim 1, wherein the drawer comprises an end cover, and the upper frame is arranged to be protruded from the lower frame, and a recess is formed at the side on which the opening of the fresh-keeping box body is provided, and at least a part of the end cover is placed in the recess.

10. A refrigerator, comprising:
a cold-storage room;
a cold-storage air channel communicated with the cold-storage room, the cold-storage air channel has an air outlet; and
the fresh-keeping device according to any one of claims 1 to 9 arranged in the cold-storage room, wherein the refrigerating air channel is communicated with the air outlet.
